# EUROPÄISCHE PATENTSCHRIFT

(11) **EP 2 832 523 B1**
(45) Veröffentlichungstag und Bekanntmachung des Hinweises auf die Patenterteilung: **17.01.2018**
(21) Anmeldenummer: 14179254.9
(22) Anmeldetag: 31.07.2014
(51) Int. Cl.: B29C 49/42, B29C 49/46

(54) **Sterile Blasformmaschine und Verfahren**
Sterile blow moulding machine and method
Machine de formage par soufflage stérile et procédé

(30) Priorität: 31.07.2013 DE 102013108212
(43) Veröffentlichungstag der Anmeldung: 04.02.2015
(73) Patentinhaber: Krones AG, 93073 Neutraubling (DE)
(72) Erfinder: Winzinger, Frank, 93073 Neutraubling (DE)
(74) Vertreter: Bittner, Bernhard

(56) Entgegenhaltungen:
- EP-A1- 1 982 820
- EP-A1- 2 116 353
- EP-A1- 2 279 850

## Beschreibung

Die vorliegende Erfindung bezieht sich auf eine Vorrichtung zum Umformen von Kunststoffvorformlingen zu Kunststoffbehältnissen. Derartige Vorrichtungen sind aus dem Stand der Technik seit langem bekannt. Dabei werden erwärmte Kunststoffvorformlinge mit einem gasförmigen Medium beaufschlagt und dadurch expandiert. Weiterhin werden üblicherweise die Behältnisse auch mittels einer Reckstange in ihrer Längsrichtung während des Expansionsvorgangs gedehnt. In jüngerer Zeit ist man auch bestrebt, derartige Vorrichtungen aseptikgeeignet auszugestalten. Daher sind aus dem Stand der Technik bereits mehrere derartige sterile Blasformmaschinen bekannt.
Derartige Blasformmaschinen müssen jedoch im Betrieb in regelmäßigen Abständen gereinigt bzw. neu sterilisiert werden. Dies ist teilweise relativ aufwendig und auch die Zugänglichkeit dieser Maschinen ist oftmals problematisch.
Der vorliegenden Erfindung liegt daher die Aufgabe zugrunde, eine Vorrichtung zum Umformen von Kunststoffvorformlingen zu Kunststoffbehältnissen zur Verfügung zu stellen, welche mittels vergleichsweise einfachen Maßnahmen gereinigt werden kann. Darüber hinaus sollte die Vorrichtung - insbesondere für Wartungszwecke - relativ leicht zugänglich sein.

Die Druckschrift EP 2 279 850 offenbart eine Vorrichtung gemäß dem Oberbegriff des Anspruchs 1. Diese Aufgaben werden erfindungsgemäß durch den Gegenstand des unabhängigen Anspruchs erreicht. Vorteilhafte Ausführungsformen und Weiterbildungen sind Gegenstand der Unteransprüche.

Eine erfindungsgemäße Vorrichtung zur Umformung von Kunststoffvorformlingen zu Kunststoffbehältnissen weist eine Transporteinrichtung auf, welche die Kunststoffvorformlinge entlang eines vorgegebenen Transportpfades transportiert. Dabei weist die Transporteinrichtung einen um eine vorgegebene Drehachse drehbaren Träger auf, an dem eine Vielzahl von Umformungsstationen zum Umformen der Kunststoffvorformlinge zu den Kunststoffbehältnissen angeordnet ist. Weiterhin weist die Vorrichtung einen Reinraum auf, innerhalb dessen zumindest Bestandteile der Umformungsstationen angeordnet sind. Dabei ist dieser Reinraum mit wenigstens einer oberen Begrenzungswand und wenigstens einer unteren Begrenzungswand gegenüber einer unsterilen Umgebung abgegrenzt. Weiterhin weist die Vorrichtung eine Antriebseinrichtung zum Antreiben des Trägers auf und diese Antriebseinrichtung ist außerhalb des Reinraums angeordnet.

Erfindungsgemäß ist wenigstens ein in der Richtung der Drehachse zwischen der oberen Begrenzungswandung und der unteren Begrenzungswandung liegender Raumabschnitt der Vorrichtung, der wenigstens einen Abschnitt der geometrischen Drehachse enthält, materialfrei ausgebildet. Vorzugsweise erstreckt sich der Reinraum auch über diese geometrische Drehachse hinweg. Dies bedeutet, dass die geometrische Drehachse wenigstens abschnittsweise durch den Reinraum hindurch verläuft. Es wäre jedoch auch möglich, dass dieser Raumabschnitt, der die Drehachse enthält, nicht als Sterilraum ausgebildet ist.

Bevorzugt sind diese beiden Begrenzungswandungen zwar direkt oberhalb und unterhalb der geometrischen Drehachse, es wäre jedoch auch möglich, dass diese Begrenzungswandungen ausschließlich seitlich, das heißt in einer zu der Drehachse senkrechten Richtung, gegenüber dieser Drehachse versetzt sind. Im Gegensatz zu aus dem Stand der Technik bekannten Vorrichtungen wird daher vorgeschlagen, dass der Bereich der geometrischen Drehachse der Transporteinrichtung, in dem sich üblicherweise eine Antriebswelle oder ein Drehverteiler (aus diesem werden den Umformungsstationen üblicherweise Temperiermedium zum Temperieren der Blasformen und/oder Druckluft zum Aufblasen der Flaschen zugeführt) befindet, wenigstens teilweise freigelassen wird (d.h. materialfrei (und im Produktionsmodus auch flüssigkeitsfrei)).

Die Drehachse ist insbesondere im Wesentlichen lotrecht, d.h. die Verlängerung der Drehachse schneidet den Erdmittelpunkt. "Oben" ist dabei weiter vom Erdmittelpunkt entfernt als "unten". "Höhe" ist im Folgenden eine Ebene, welche senkrecht zur Drehachse steht.

Vorteilhaft ist eine Verlängerung der Drehachse der Transporteinrichtung bzw. des Blasrads, d.h. insbesondere ein Bereich, in den sich eine geometrische Verlängerung einer Drehachse bzw. Drehwelle erstrecken würde, materialfrei ausgebildet. Vorteilhaft ist dabei die vollständige (geometrische) Verlängerung materialfrei d.h. bevorzugt wellenfrei ausgebildet.

Insbesondere sind als Bestandteil der Umformungsstation zumindest zwei Teile einer Blasform innerhalb des Reinraums angeordnet.

Insbesondere ist zumindest der Bereich der Drehachse materialfrei ausgebildet, welcher sich zwischen einer Höhe einer Oberkante einer Blasform befindet und einer Höhe einer Unterkante einer Blasform.

Der Reinraum kann eine Atmosphäre aufweisen, welche weniger Keime, Verunreinigungen, Bakterien oder Sporen enthält als die Atmosphäre außerhalb des Reinraums. Insbesondere kann hierzu ein Luftfilter an der Vorrichtung angeordnet sein, durch welchen (beispielsweise mittels eines Gebläses) gefilterte Luft in den Reinraum eingeleitet wird. Insbesondere kann es sich bei der eingeleiteten Luft um im Wesentlichen sterile Luft handeln. Insbesondere wird der Reinraum somit unter einem leichten Überdruck gegenüber der Atmosphäre außerhalb des Reinraums gehalten. Der Druckunterschied kann beispielsweise in einem Bereich von 0,1 mbar bis 400mbar betragen. Insbesondere kann der Reinraum Abdichtungen aufweisen, welche den Reinraum gegenüber der äußeren Atmosphäre zumindest bereichsweise abdichten. Bei den Dichtungen kann es sich um Dichtungen aus elastischem Material oder um hydraulische Dichtungen wie Wasserschlösser handeln. Die Dichtungen können vorzugsweise kreisförmig entlang des Umfangs des drehenden Trägers ausgebildet sein.

Weiterhin können der Reinraum und/oder der Teile der Umformungsstationen, welche sich im Reinraum befinden, in gewissen, insbesondere regelmäßigen, Zeitabständen gereinigt und/oder sterilisiert werden. Vorzugsweise kann eine Reinigung zuerst mit Schaum, dann zum Entfernen des Schaums mit Sterilwasser durchgeführt werden. Eine Sterilisation kann mit gasförmigen Wasserstoffperoxid durchgeführt werden. Die Mittel zum Einbringen der Reinigungs- und Sterilisationsmedien können stationär oder mit dem Träger mitdrehend angeordnete Düsen sein. Auch durch Blasdüsen der Umformungsstationen kann beispielsweise Sterilisationsmedium austreten. Die genannten Mittel zur Bereitstellung des Reinraums oder Kombinationen von ihnen können je nach den Anforderungen an die Hygiene, Sauberkeit oder Sterilität der Maschine oder der mit ihr gefertigten Kunststoffbehältnisse eingesetzt werden.

Bei einer bevorzugten Ausführungsform ist der Raumabschnitt, der sich von der oberen Begrenzungswandung zu der unteren Begrenzungswandung erstreckt, im Wesentlichen antriebswellenfrei und/oder drehverteilerfrei ausgebildet. Es wird daher vorgesehen, dass zumindest in diesem Bereich der Vorrichtung auf eine Antriebswelle und/oder einen Drehverteiler verzichtet wird.

Vorteilhaft ist daher eine Antriebswelle zum Antreiben der Transporteinrichtung vollständig außerhalb des Reinraums angeordnet. Es wird bei dieser Ausführungsform damit eine säulenfreie Ausgestaltung eines Bereichs des Reinraums, insbesondere desjenigen Bereichs, der die Drehachse enthält, beschrieben. Durch das Fehlen dieser Antriebswelle kann die Zugänglichkeit des Reinraums für einen Bediener verbessert werden. Weiterhin ist auf diese Weise auch eine Innenreinigung des Reinraums besser ermöglicht.

Bei einer weiteren vorteilhaften Ausführungsform ist der Reinraum mittels einer weiteren Wandung abgegrenzt, wobei wenigstens die obere Begrenzungswandung und/oder die untere Begrenzungswandung beweglich gegenüber dieser weiteren Wandung ist. Vorteilhaft bewegen sich dabei die obere und die untere Begrenzungswandung und die weitere Wandung ist bevorzugt eine Außenwandung, welche stationär angeordnet ist. Bei einer weiteren vorteilhaften Ausführungsform ist wenigstens eine Dichtungseinrichtung vorgesehen, welche diese Bewegung der ober bzw. der unteren Begrenzungswandung gegenüber der weiteren Wandung abdichtet. So kann bevorzugt diese Dichtungseinrichtung beispielsweise als hydraulische Dichtung und insbesondere als sogenanntes Wasserschloss ausgeführt sein, welches einen umlaufenden und einen mit einer Flüssigkeit befüllbaren Kanal aufweist, in den jeweils ein Bestandteil der relativbeweglichen Einrichtung, beispielsweise ein schwertartiger Abschnitt, der oberen oder unteren Begrenzungswandung eintaucht. Bei einer weiteren vorteilhaften Ausführungsform sind mindestens zwei derartige und insbesondere genau zwei Wasserschlösser angeordnet und zwar bevorzugt in Richtung der Drehachse versetzt zueinander.

Insbesondere kann eine radial außen liegende Wand rund sein, so dass der Reinraum im Wesentlichen zumindest segmentweise die Form einer Scheibe hat. "Zumindest segmentweise", weil der Bereich um Transportsterne zur Ein- und Ausführung von Flaschen in/aus den/dem Träger radial nach außen von Drehachse weiter beabstandet sein kann.

Es wäre auch denkbar, den Reinraum im Wesentlichen in Form eines Quaders auszubilden. Somit wird das rein zu haltende Volumen zwar vergrößert, jedoch ist die Produktion von geraden Wänden nicht so aufwändig.

Bei einer weiteren vorteilhaften Ausführungsform weist die Vorrichtung eine Vielzahl von Medienleitungen zur Versorgung der Umformungsstationen auf, wobei bevorzugt diese Medienleitungen zumindest teilweise und bevorzugt ausschließlich außerhalb des Reinraums verlaufen.

Diese Medienleitungen können auch zumindest bereichsweise innerhalb des Reinraums verlaufen, sollten aber bevorzugt so kurz wie möglich gewählt werden. Insbesondere ist eine Leitung zur Zuführung von Temperiermedium kürzer als ein Viertel des Durchmessers des drehbaren Trägers.

Zum Betrieb einer derartigen Umformungsstation sind üblicherweise unterschiedliche Medienleitungen erforderlich. So sind beispielsweise Druckleitungen erforderlich, welche ein gasförmiges Medium und insbesondere die Blasluft den Kunststoffvorformlingen zuführen. Weiterhin sind üblicherweise Anschlüsse für Temperiermedien vorgesehen, welche eine Temperierung von Teilen der Umformungsstation, wie beispielsweise Teilen von Blasformen, ermöglichen. Vorteilhaft weisen die einzelnen Umformungsstationen jeweils zwei gegenüber einander schwenkbare Seitenteile auf, die einen Aufnahmeraum ausbilden, innerhalb dessen die Kunststoffvorformlinge zu den Kunststoffbehältnissen expandiert werden können. Desweiteren kann auch ein Bodenteil angeordnet sein, welches insbesondere in einer zur Drehachse parallelen Richtung bewegt werden kann. Desweiteren kann die Umformungsstation auch nur ein bewegbares Seitenteil umfassen, während das andere Seitenteil feststehend gegenüber dem Träger angeordnet ist.

Weiterhin weisen die Umformungsstationen vorteilhaft noch eine Druckkissenanordnung auf, welche zwischen einem Blasformträger und beispielsweise einer Blasformschale oder einem Blasformteil angeordnet ist, um während eines Expansionsvorgangs der Kunststoffvorformlinge die beiden Blasformteile aufeinander zuzustellen bzw. zuzupressen. Bei den oben erwähnten Medienleitungen kann es sich dabei bevorzugt beispielsweise um Pneumatikschläuche oder Kühlmittelschläuche handeln.

Die Temperiermittel werden, wie oben erwähnt, eingesetzt, um Bestandteile der Blasform zu temperieren und insbesondere zu kühlen. Dabei ist es möglich, dass innerhalb des Reinraums die Leitungen, wie gesagt, nicht vorhanden sind, sondern beispielsweise innerhalb von Bauteilen ausgebildet sind, beispielsweise innerhalb einer Welle, welche für den Schwenkvorgang der Blasformteile bezüglich einander zuständig ist. Weiterhin wäre es auch möglich, dass die Leitungen zumindest abschnittsweise in Wandungsabschnitten ausgebildet sind und insbesondere in einem Wandungsabschnitt, der den Reinraum begrenzt.

Es wäre auch denkbar, dass die Leitungen über eine in der Reinraumwand vorhandene Kupplung angeschlossen werden und im Reinraum eine Verlängerung ab der Kupplung vorhanden ist, welche zur Umformungsstation führt. Mit anderen Worten würde das in der Leitung geführte Fluid die Reinraumwand durchtreten. Insbesondere handelt es sich bei der Reinraumwand um die untere Begrenzungswand des Reinraums.

Vorteilhaft verläuft diese Verbindungsleitung wenigstens abschnittsweise in einer vertikalen Richtung und vorzugsweise auch abschnittsweise in einer horizontalen Richtung.

Es wäre jedoch auch eine schräge Führung dieser Verbindungsleitungen denkbar. Durch die Verwendung einer derartig schrägen Verbindungsleitung könnte auch auf Knicke innerhalb der Verbindungsleitung verzichtet werden und auf diese Weise die Anfälligkeit gegenüber einem Absetzen von Keimen verbessert werden.

Wenn flexible Leitungen innerhalb des Reinraums vorhanden sind, sind diese insbesondere so kurz gewählt, dass sie den Boden des Reinraums aufgrund ihrer Gewichtskraft nicht berühren. Somit kann die Reinigung/Sterilisation erleichtert werden.

Es wäre weiterhin auch denkbar und bevorzugt, dass die besagten Wandungen auch Tragefunktionen aufweisen, die beispielsweise zur Abstützung der oberen Begrenzungswand dienen. Weiterhin können an der oberen Begrenzungswand und insbesondere außerhalb des Reinraums ebenfalls Teile der Umformungsstation angeordnet sein, wie beispielsweise ein Antrieb zum Bewegen einer Reckstange und dergleichen. Vorteilhaft weisen die Umformungsstationen jeweils Reckstangen auf, welche in die umzuformenden Behältnisse einführbar sind, um diese in Längsrichtung zu dehnen.

So wäre es beispielsweise möglich, dass eine Abstützung der oben liegenden Bestandteile der Vorrichtung, wie beispielsweise einer Luftverteileinrichtung, und Druckreduzierstationen ausschließlich durch die Seitenwände bzw. die einzelnen Umformungsstationen selbst erfolgt. Es wäre jedoch auch möglich, dass Pneumatikbestandteile und insbesondere sämtliche Pneumatikbestandteile unterhalb der unteren Begrenzungswand, das heißt unter einen Tisch, an dem die Umformungsstationen montiert sind, angeordnet werden.

Bei einer weiteren vorteilhaften Ausführungsform verläuft wenigstens eine Verbindungsleitung wenigstens einer Umformungsstation mit einem fließfähigen bzw. gasförmigen oder flüssigen Medium durch ein Wellenelement dieser Umformungsstation. Dabei kann es sich, wie oben erwähnt, beispielsweise um eine Hauptwelle handeln, welche für den Schwenkvorgang der Blasformteile bezüglich einander dient.

Bei einer weiteren vorteilhaften Ausführungsform ist wenigstens eine Innenwandung der Vorrichtung, welche einen die Drehachse enthaltenen Raum begrenzt, gegenüber einer horizontalen Ebene schräg ausgebildet, derart, dass ein flüssiges Medium über diese Schrägfläche abfließen kann. Vorteilhaft handelt es sich hierbei um eine Innenwandung der unteren Begrenzungswandung.

Bei dieser Ausgestaltung ist insbesondere zur leichteren Reinigung die innere Fläche beispielsweise des Blasrades schief angeordnet und insbesondere konusförmig ausgebildet, sodass ein Reinigungsmedium abfließen kann. Dabei wäre es möglich, dass eine direkte Verbindung zwischen dieser Fläche und dem umlaufenden Kanal eines Wasserschlosses besteht.

Bei einer weiteren vorteilhaften Ausführungsform weist die Vorrichtung eine Sterilisationseinrichtung und/oder Reinigungseinrichtung zum Sterilisieren und/oder Reinigen wenigstens eines Bereiches des Reinraums auf. Dabei können beispielsweise eine oder mehrere Reinigungsdüsen vorgesehen sein, welche Bereiche der Vorrichtungen, beispielsweise Wandungsbereiche, aber auch andere Elemente mit Reinigungsmittel beaufschlagen.

Weiterhin können auch Beaufschlagungseinrichtungen, wie beispielsweise Düsenelemente, vorgesehen sein, welche die Maschine mit einem gasförmigen Sterilisationsmedium, wie beispielsweise Wasserstoffperoxid, beaufschlagen. Vorteilhaft kann dabei die Reinigung der Vorrichtung über Düsen vorgesehen sein, beispielsweise eine Düse, die an der oberen oder der unteren Begrenzungswandung des Reinraums angeordnet ist. Daneben können jedoch auch Reinigungselemente vorgesehen sein, welche ein Reinigungsmedium über beispielsweise Ventileinrichtungen der Vorrichtung zuführen.

Durch die materialfreie Ausprägung der Drehachse ist es beispielsweise möglich, mit nur wenigen Reinigungs- und/oder Sterilisationsdüsen große Flächen des Reinraums zu benetzen, da der austretende Gas- oder Flüssigkeitsstrom beispielsweise quer durch die Drehachse "zur anderen Seite" kommen kann.

Weiterhin ist bei der Materialfreiheit der Drehachse die Anbringung einer solchen Düse in der Drehachse möglich, mit der man zentral Reinigungs- oder Sterilisationsmedium in alle radialen Richtungen ausbringen kann.

So weisen bevorzugt die einzelnen Umformungsstationen jeweils Ventilblöcke auf, welche eine Vielzahl von Ventilen aufweisen, die zur Zuführung der Blasluft an die Kunststoffvorformlinge dienen. Über diese Ventileinrichtungen kann in einer speziellen Reinigung auch ein Reinigungs- und/oder Sterilisationsmedium zugeführt werden. Bei einer weiteren vorteilhaften Ausführungsform ist eine Steuerungseinrichtung vorgesehen, welche insbesondere in einem Reinigungsmodus eine Reinigung und/oder Sterilisation der Vorrichtung durchführt. So ist es beispielsweise möglich, dass zunächst eine Reinigung, beispielsweise mittels eines Reinigungsmittels, durchgeführt wird und anschließend eine Sterilisation der Vorrichtung.

Vorteilhaft weist die Vorrichtung sowohl Reinigungseinrichtungen auf, welche geeignet sind, die Vorrichtung mit einem Reinigungsmedium zu beaufschlagen, als auch Sterilisationseinrichtungen, welche geeignet sind, die Vorrichtung zu sterilisieren, insbesondere durch Beaufschlagung mit einem Sterilisationsmedium, aber gegebenenfalls auch durch Beaufschlagung mit sterilisierender Strahlung, insbesondere Elektronenstrahlung, UV-Strahlung, Röntgenstrahlung und dergleichen. Ein Fluten des Reinraums mit Ozon zur Sterilisation wäre auch denkbar.

Bei einer weiteren vorteilhaften Ausführungsform weist wenigstens eine Begrenzungswandung des Reinraums eine Öffnung auf, und insbesondere eine verschließ- und öffenbare Öffnung, über welche insbesondere ein Bediener einen die Drehachse enthaltenden Raum der Vorrichtung erreichen kann. Insbesondere handelt es sich hierbei um eine Öffnung, welche groß genug ist, dass ein Bediener in die Maschine eintreten kann. Bevorzugt ist diese Öffnung an einer oberen Begrenzungswand des Reinraums angeordnet. Dabei können Schließmittel vorgesehen sein, welche ein sicheres Verschließen dieser Öffnung ermöglichen. Auch können Sicherungsmittel vorgesehen sein, welche einen ordnungsgemäßen Schließzustand dieser Öffnung erfassen und gegebenenfalls bei Nichtvorliegen eines ordnungsgemäß verschlossenen Zustandes einen Alarm ausgeben.

Insbesondere schneidet die Drehachse die Öffnung.

Bei einer weiteren bevorzugten Ausführungsform ist die Vorrichtung zum kontinuierlichen Betrieb ausgebildet. Dabei ist insbesondere die Transporteinrichtung derart ausgebildet, dass sie sich in einem Arbeitsbetrieb kontinuierlich bewegt bzw. dreht.

Die Erfindung bezieht sich auch auf ein Verfahren zum Reinigen und/oder Sterilisieren von einem Reinraum oder in dem Reinraum angeordneter Bestandteile einer Umformungsstation einer Vorrichtung zur Umformung von Kunststoffvorformlingen zu Kunststoffbehältnissen mit einer Transporteinrichtung, welche die Kunststoffvorformlinge entlang eines vorgegebenen Transportpfads transportiert, wobei die Transporteinrichtung einen um eine vorgegebene Drehachse drehbaren Träger aufweist, an dem eine Vielzahl von Umformungsstationen zum Umformen der Kunststoffvorformlinge zu den Kunststoffbehältnissen angeordnet ist, mit einem Reinraum, innerhalb dessen zumindest Bestandteile der Umformungsstationen angeordnet sind, wobei dieser Reinraum mit wenigstens einer oberen Begrenzungswandung und wenigstens einer unteren Begrenzungswandung gegenüber einer unsterilen Umgebung abgegrenzt ist und wobei die Vorrichtung eine Antriebseinrichtung zum Antreiben des Trägers aufweist und diese Antriebseinrichtung außerhalb des Reinraums angeordnet ist, wobei wenigstens ein in der Richtung der Drehachse zwischen der oberen Begrenzungswandung und der unteren Begrenzungswandung liegender Raumabschnitt, der Vorrichtung, der wenigstens einen Abschnitt der geometrischen Drehachse enthält, materialfrei ausgebildet ist und sich der Reinraum innerhalb des Raumabschnitts über die geometrische Drehachse hinweg erstreckt, wobei Reinigungs- und/oder Sterilisationsmedium durch die Drehachse des Trägers in den Reinraum eintritt oder durch die Drehachse des Trägers hindurchtritt.

Die Erfindung bezieht sich auch auf ein Verfahren zum Durchführen von Wartungs- oder Blasformwechselarbeiten an einer Vorrichtung zum Umformen von Kunststoffvorformlingen zu Kunststoffbehältnissen in einem Reinraum und einer verschließbaren Öffnung, durch welche der Reinraum betretbar ist, mit den folgenden Schritten in der angegebenen Reihenfolge:
1) Produzieren von Behältnissen in einem Produktionsmodus
2) Herunterfahren der Vorrichtung in einen Wartungs- bzw. Blasformwechselmodus
3) Öffnen der Öffnung
4) Wechseln der Blasformen und/oder Durchführung von Wartungsarbeiten
5) Schließen der Öffnung
6) Reinigen und/oder Sterilisieren des Reinraums oder von in dem Reinraum angeordneten Bestandteilen einer Umformungsstation
7) Hochfahren der Maschine in den Produktionsmodus

Vorzugsweise wird die Vorrichtung in einem Arbeitsbetrieb wenigstens zeitweise und bevorzugt stets kontinuierlich betrieben. Insbesondere dreht sich dabei der oben beschriebene Träger kontinuierlich.

Weitere Vorteile und Ausführungsformen ergeben sich aus den beigefügten Zeichnungen. Darin zeigen:
- Fig. 1: Eine schematische Darstellung einer erfindungsgemäßen Vorrichtung zum Umformen von Kunststoffvorformlingen zu Kunststoffbehältnissen in der Draufsicht, also in Richtung Erdmittelpunkt;
- Fig. 2: eine Seitenansicht einer erfindungsgemäßen Vorrichtung in horizontaler Richtung;
- Fig. 3: eine Seitenansicht einer Vorrichtung in einer weiteren Ausführungsform;
- Fig. 4: eine Ansicht einer erfindungsgemäßen Vorrichtung in einer weiteren Ausführungsform;
- Fig. 5: eine weitere Seitenansicht einer erfindungsgemäßen Vorrichtung;
- Fig. 6: eine Seitenansicht einer weiteren erfindungsgemäßen Vorrichtung;
- Fig. 7: eine weitere Detaildarstellung einer erfindungsgemäßen Vorrichtung in einer weiteren Ausführungsform; und
- Fig. 8: eine weitere Detailansicht einer erfindungsgemäßen Vorrichtung.

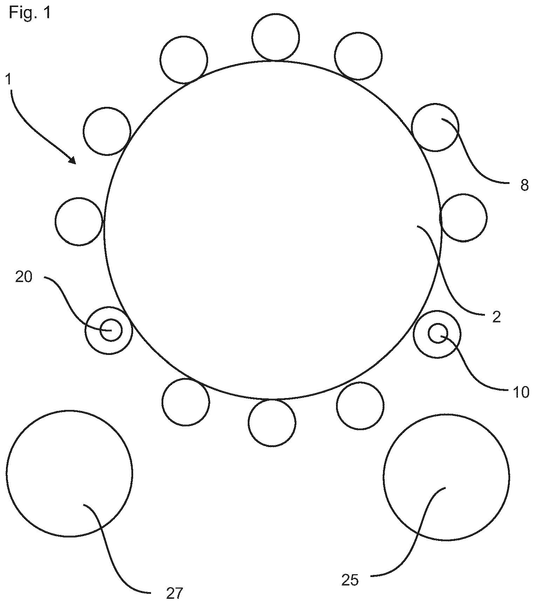

Fig. 1 zeigt eine grob schematische Darstellung einer erfindungsgemäßen Vorrichtung. Dabei ist eine Zuführeinrichtung 25, wie etwa ein Zuführrad vorgesehen, welches Kunststoffbehältnisse und insbesondere Kunststoffvorformlinge 10 der Vorrichtung 1 zuführt. Die Vorrichtung 1 weist dabei einen drehbaren Träger 2 auf, an dem eine Vielzahl von Umformungsstationen 8 angeordnet ist. Während ihres Transports werden die Kunststoffvorformlinge 10 zu Kunststoffbehältnissen 20 expandiert.

Über eine Abführeinrichtung 27, welche ebenfalls bevorzugt wieder als Sternrad ausgeführt ist, können die gefertigten Kunststoffbehältnisse 20 von der Vorrichtung 1 abgeführt werden. An den Sternrädern sind nicht dargestellte Klammern angeordnet, welche die Kunststoffbehältnisse bzw. Vorformlinge einzeln greifen. Der Reinraum u.a. ist nicht dargestellt.

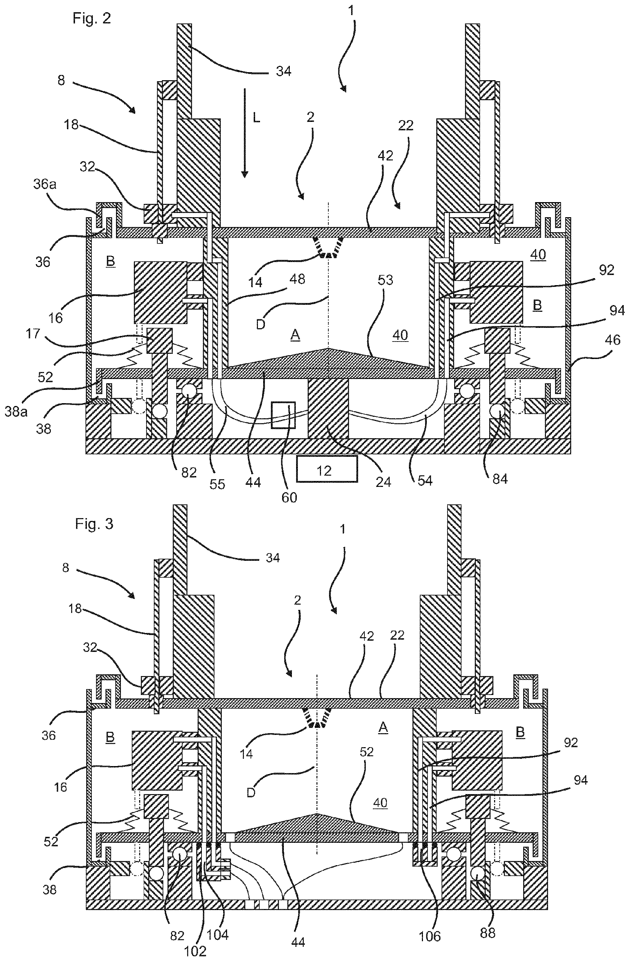

Fig. 2 zeigt eine Seitendarstellung einer erfindungsgemäßen Vorrichtung. Man erkennt hier wieder die Transporteinrichtung 2, welche hier eine obere Begrenzungswand 42 sowie eine untere Begrenzungswand 44 aufweist. Diese beiden Begrenzungswände sind drehfest miteinander verbunden. Unterhalb der unteren Begrenzungswand 44 sind eine Antriebswelle 24 und auch eine Antriebseinrichtung 12 vorgesehen. Die Antriebseinrichtung ist durch ein nicht dargestelltes Loch in der stationären Platte zwischen Antrieb 12 und Welle 24 mit der Welle 24 verbunden. Damit ist die Antriebseinrichtung außerhalb des Reinraums 40 vorgesehen. Alternativ kann der Antrieb auch radial weiter außen angeordnet sein und beispielsweise an der Begrenzungswand 44 von unten oder an dem oberen Teil der Kugeldrehverbindung 82 angreifen. An der Transporteinrichtung ist eine Vielzahl von Umformungsstationen 8 (hier nur zwei gezeigt) angeordnet. Die Umformungsstationen befinden sich alle auf demselben Teilkreis und sind in äquidistanten Abständen zueinander angeordnet.

Das Bezugszeichen 22 kennzeichnet in seiner Gesamtheit den Träger, an dem die einzelnen Umformungsstationen 8 angeordnet sind. Begrenzungswandungen 42, 44 sind dabei auch Bestandteile dieses Trägers 22.

Die Antriebswelle 24 dient hier auch als Verteileinrichtung (Drehverteiler) für fließfähige Medien, welche den einzelnen Umformungsstationen 8 über Verbindungsleitungen, wie beispielsweise Kühlmittelschläuche 54, zugeführt werden. Vorteilhaft enthält diese Antriebswelle 24 eine Vielzahl von Medienzuführungsspuren, beispielsweise für einen Vorlauf und einen Rücklauf für eine Kühlflüssigkeit. Daneben können auch Zuführungsspuren für die Zurverfügungstellung von Blasluft vorgesehen sein. Das Bezugszeichen 55 kennzeichnet eine derartige Verbindungsleitung, welche hier beispielsweise als Blasluftschlauch ausgeführt ist. Man erkennt, dass der Drehverteiler 24 komplett außerhalb des Reinraums 40 angeordnet ist.

Schematisch ist hier auf der linken Seite auch eine Konsole 60, wie beispielsweise eine Luftkonsole, dargestellt, welche aus einem zugeführten Hochdruck wenigstens zwei und bevorzugt wenigsten drei definierte Drücke generieren kann. Dabei kann es sich beispielsweise um einen Vorblasdruck und einen Fertigblasdruck sowie einen Zwischenblasdruck handeln. Dabei könnte diese Konsoleneinrichtung 60 Druckminderungsmittel aufweisen, welche einen zugeführten Druck auf vorbestimmte Niveaus mindern. Entsprechend könnten auch mehrere Blasluftschläuche vorgesehen sein, welche von der besagten Welleneinrichtung 24 bzw. der Konsole 60 zu den einzelnen Umformungsstationen 8 führen.

Auf der rechten Seite ist eine Alternative zur rechten Seite gezeigt, bei der die Blasluftschläuche direkt vom Drehverteiler 24 zu den Stationen gelangen - hier könnte die Blasluft schon vorher in mehrere Druckniveaus zerlegt worden sein. In dem Fall würden auch mehrere Blasluftschläuche (nicht gezeigt) zu den Stationen führen.

Die Bezugszeichen 92 und 94 beziehen sich auf Leitungsverbindungen, welche den einzelnen Umformungsstationen 8 bzw. beispielsweise den Blasformteilen 16 fließfähige Medien zuführen. Dabei kann beispielsweise die Verbindung 94 zur Zuführung eines Kühlmediums für die Blasformen dienen und das Bezugszeichen 92 eine Leitungsverbindung für Blasluft kennzeichnen, welche die Blasluft einem Ventilblock 32 zuführt.

Das Bezugszeichen 18 kennzeichnet schematisch eine Reckstange, welche in der Längsrichtung L bewegbar ist, um die Kunststoffvorformlinge in ihrer Längsrichtung zu dehnen. Dabei ist vorteilhaft diese Reckstange 18 auch gegenüber dem Ventilblock 32 in der Längsrichtung L beweglich. Das Bezugszeichen 34 kennzeichnet eine Antriebseinrichtung, wie beispielsweise ein Linearmotor, einen Pneumatikzylinder oder einen Servoantrieb, der die besagte Bewegung der Reckstange 18 in ihrer Längsrichtung erzeugt.

Das Bezugszeichen 40 kennzeichnet in seiner Gesamtheit einen Reinraum, der sich hier sowohl in dem Bereich, in dem die Blasformhalter 16 angeordnet sind, erstreckt, als auch in demjenigen Bereich, in dem sich die geometrische Drehachse D, bezüglich welcher sich der Träger 42 dreht, befindet.

Die Bezugszeichen 36 und 38 kennzeichnen jeweils Dichtungseinrichtungen, bei denen es sich hier um sogenannte Wasserschlösser handelt. Diese weisen dabei jeweils umlaufende Kanäle auf, in denen sich eine sterile oder auch sterilisierende Flüssigkeit befindet. Ein Eingriffsbereich 36a, 38a wie ein Schwert, welches in Verbindung mit den Trägern 42, 44 steht, taucht in diese Flüssigkeit ein, sodass insgesamt eine Abdichtung erreicht wird.

Das Bezugszeichen 52 kennzeichnet ein weiteres Dichtungsmittel, mit dem eine Abdichtung einer Bewegung eines Bodenteils 17 der Blasform erreicht wird. Hierbei kann es sich z.B. um einen Faltenbalg handeln. Ähnliche Abdichtungsmaßnahmen (nicht gezeigt) können auch für die Reckstange oder eine Blasdüse verwendet werden. Beispielsweise könnte für die Bewegung der Reckstange ein nur zum Reinraum hin offenes Gehäuse verwendet werden, in dem auch Reinraumbedingungen herrschen. Die Kraft könnte durch die Gehäusewand über einen Magneten übertragen werden.

Das Bezugszeichen 82 kennzeichnet eine Lagereinrichtung (hier eine Kugeldrehverbindung), welche die Drehbewegung der beiden Begrenzungswände 42 und 44 lagert. Das Bezugszeichen 46 kennzeichnet eine Außenwandung, die hier stationär angeordnet ist. Das Bezugszeichen 48 kennzeichnet ein Wellenelement bzw. eine Schwenkachse, in der, wie oben erwähnt, auch die besagten Leitungsverbindungen 92, 94 verlaufen. Diese Schwenkwelle bzw. dieses Wellenelement 48 dient auch dazu, um die obere Begrenzungswand 42 gegenüber der unteren Begrenzungswand 44 abzustützen. Die Schwenkwelle dient bevorzugt zum Schwenken der Blasformteile zum Öffnen und Schließen der Blasformen. Es können auch weitere Verbindungen zur Stütze der oberen Wandung 42 oder zur Durchführung von Medien zu bestimmten Positionen vorhanden sein (nicht gezeigt), welche nicht als Schwenkachse für die Blasformteile dienen. Diese sind bevorzugt außerhalb des Bereichs der Drehachse D angeordnet.

Das Bezugszeichen 14 kennzeichnet grob schematisch eine Reinigungseinrichtung, welche dazu dient, um in einem Reinigungsmodus Bereiche des Reinraums 40 und insbesondere Wandungsbereiche und/oder Teile der Umformungsstation, insbesondere Teile der Blasform mit einem bevorzugt flüssigen oder schaumförmigen Reinigungsmittel und / oder Sterilwasser zu beaufschlagen. Bevorzugt weist dabei die Innenwandung 53 der unteren Begrenzungswand 44 eine schräg verlaufende Fläche, beispielsweise eine konusförmige Fläche auf, über welche ein Reinigungsmittel abfließen kann. Die Zuführung von Wasser und / oder Reinigungsmittel verläuft hier durch in die Wandung 44, 42 eingebrachte, nicht dargestellte Leitungen. Die Verbindung von der unteren Wand zur oberen Wand erfolgt bevorzugt über eine nicht dargestellte Verbindungssäule, welche nicht im Bereich der Drehachse liegt.

Das Bezugszeichen A kennzeichnet einen Raumabschnitt, der auch die geometrische Achse D enthält. Dieser Raumabschnitt A wird durch die beiden Begrenzungswände 42 und 44 einerseits begrenzt sowie andererseits durch die einzelnen Wellenelemente 48 bzw. deren geometrische Drehachse. Dies bedeutet, dass bei dieser Ausführungsform der Raumabschnitt A direkt in einen Raumabschnitt B, in dem die einzelnen Umformungsstationen transportiert werden, übergeht und der Übergang nur durch die einzelnen Wellenelemente 48 unterbrochen wird. Zwischen zwei Umformungsstationen ist dabei kein Wellenelement 48 vorhanden. In anderen Worten ist zumindest ein Bereich zwischen der oberen Wand 42 und der unteren Wand 44 zwischen zwei Umformungsstationen ebenfalls materialfrei ausgebildet.

Desweiteren ist zur erkennen, dass oberhalb der oberen Wand 42 keine Drehverteilung für Pneumatik (Blasluft) und Temperiermedien vorhanden ist.

Fig. 3 zeigt eine weitere Ausführungsform einer erfindungsgemäßen Vorrichtung. Der wesentliche Unterschied zu der in Fig. 2 gezeigten Ausführungsform besteht hier in der Verteilung der Medien an die einzelnen Umformungsstationen 8. Bei dieser Ausführungsform ist ein außen liegender Drehverteiler 104 vorgesehen, über den über Kanäle 102 jeweils die fließfähigen Medien über die Leitungen 92 und 94 den Umformungsstationen 8 zuführbar sind. Das Bezugszeichen 106 kennzeichnet einen stationären Drehverteilerring. Daneben ist auch, wie bei der in Fig. 2 gezeigten Ausführungsform, die in Fig. 1 dargestellte Konsole 60 vorgesehen. Die Pneumatik ist nicht dargestellt. Der Vorteil dieser Ausgestaltung besteht darin, dass auch hier innerhalb des Reinraums keine Leitungsverbindungen bzw. Schläuche verlaufen. Daneben ist auch hier wieder die Reinigungseinrichtung 14 vorgesehen, welche eine Schaumreinigung und/oder Sterilwasserbehandlung nach der Schaumreinigung bewerkstelligen kann. Nicht mit Bezugszeichen versehen sind Abläufe für das Reinigungsmedium, welche sich in der unteren Wandung 44 direkt neben den Wellen 48 befinden und durch welche Reinigungsmittel über Schläuche nach außen transportiert wird.

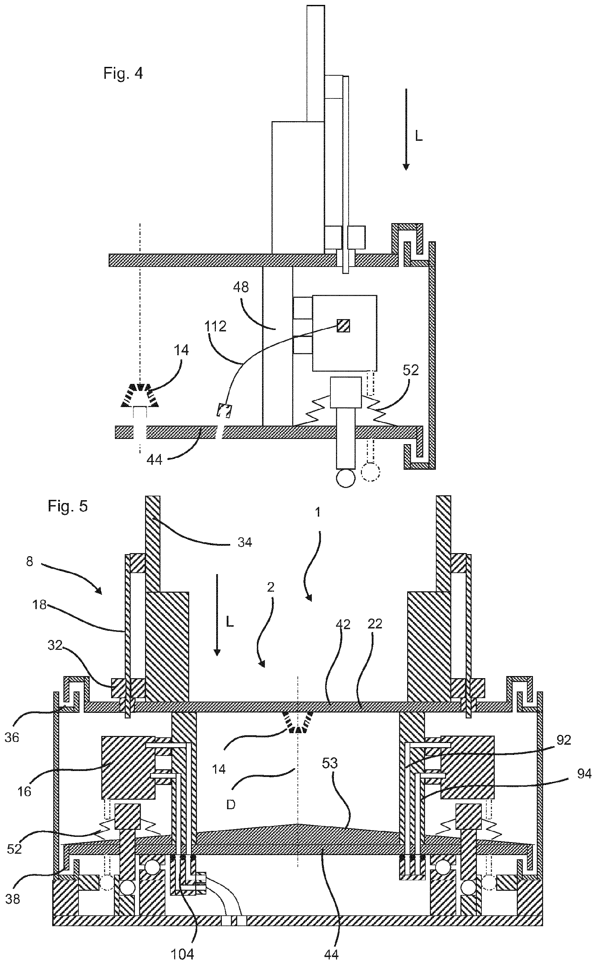

Fig. 4 zeigt eine weitere Darstellung der erfindungsgemäßen Vorrichtung. Bei dieser Ausführungsform ist eine Düse bzw. Reinigungseinrichtung 14 an der unteren Begrenzungswand 44 angeordnet. Dabei ist es möglich, dass diese Reinigungseinrichtung relativ bezüglich des Blasrades bzw. der Wandungen 42 und 44 drehbar ist. Es wäre jedoch auch denkbar, dass diese Reinigungseinrichtung drehfest mit dem Träger verbunden ist oder auch, dass mehrere derartiger Reinigungseinrichtungen an unterschiedlichen Wandungsteilen vorgesehen sind. In einem Reinigungsbetrieb kann sich auch der Träger drehen, so dass unterschiedliche Bereiche der stationären Wand 46 sterilisiert und/oder gereinigt werden. Bei einer zusätzlichen Relativbeweglichkeit erreicht man u.U. noch mehr Stellen innerhalb des beweglichen Teils der Vorrichtung 1. Weiterhin ist hier ein Kühlmittelanschluss mit einer Kühlmittelleitung 112 vorgesehen, wobei dieser Anschluss direkt an der unteren Begrenzungswand 44 des Reinraums befindlich ist.

Dies kann nötig sein, wenn nicht genügend Platz in der Welle 48 ist oder wenn der Blasformhalter relativ zur Welle 48 beweglich ist und eine Drehverteilung innerhalb der Welle 48 keinen Platz hat oder zu aufwändig ist. Diese Möglichkeiten sollen aber nicht ausgeschlossen werden und können alternativ oder kumulativ vorhanden sein.

Desweiteren ist die radiale Erstreckung des Schlauchs 112 ungefähr so lang ein Viertel des Durchmessers des Trägers. Bevorzugt ist die radiale Erstreckung noch kürzer.

Fig. 5 zeigt eine weitere Ausgestaltung der erfindungsgemäßen Vorrichtung. Man erkennt hier wiederum die Schrägfläche 53 der unteren Begrenzungswand 44. Anderes als bei den oben gezeigten Ausführungsformen erstreckt sich jedoch hier diese Schrägfläche 53 radial nach außen bis hin zu der Dichtungseinrichtung 38. Auf diese Weise kann bei einer Schaumreinigung oder einer Sterilwasserspülung dieses Reinigungs- bzw. Sterilisiermedium auch wieder über die Dichtungseinrichtungen 38 abfließen und gegebenenfalls auch diese reinigen oder auffüllen.

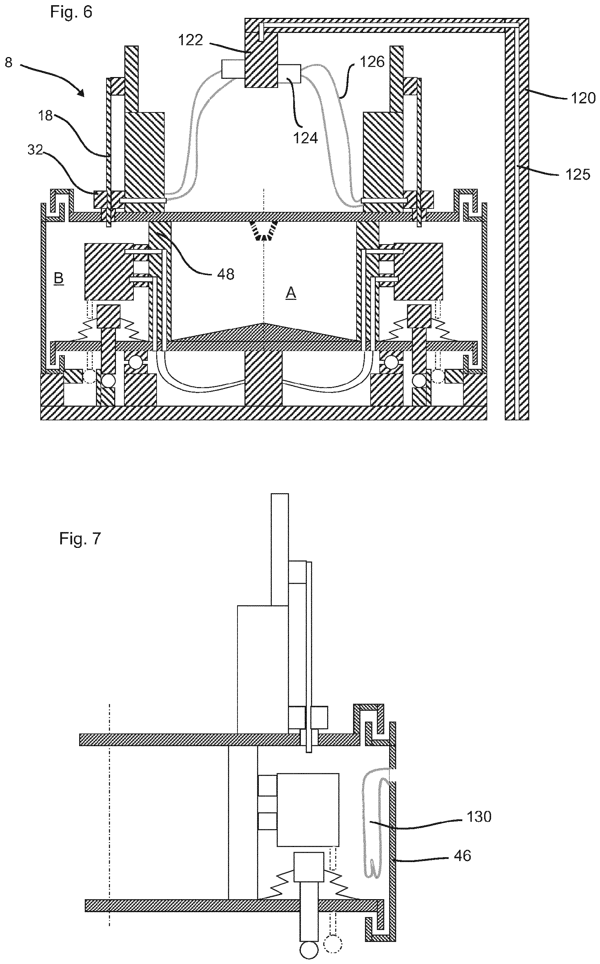

Fig. 6 zeigt eine weitere Ausführungsform der erfindungsgemäßen Vorrichtung. Bei dieser Ausführungsform sind die Zuführungen für eine Blasluft räumlich getrennt von den Verbindungsleitungen zur Zuführung des Kühlmediums. Bei dieser Ausführungsform ist eine Pneumatikdrehverbindung bzw. ein Drehverteiler 122 mit mehreren Anschlüssen vorgesehen, welche über Leitungsverbindungen 126 den einzelnen Umformungsstationen 8 das zur Expansion der Kunststoffvorformlinge verwendete Medium, das heißt die Blasluft, zuführen. Daneben ist ein bevorzugt stationärer Träger 120 vorgesehen, in dessen Inneren ebenfalls zumindest eine Zuführleitung 125 für Pneumatikmedium vorgesehen ist. Dieses Pneumatikmedium kann dabei beispielsweise von einem (nicht gezeigten) Kompressor stammen.

Bei der hier gezeigten Ausführungsform ist damit der Träger 120 stationär angeordnet und der Drehverteiler 122 dreht sich relativ gegenüber diesen. Die Lagerung hierfür ist der Einfachheit halber nicht dargestellt.

Das Bezugszeichen 124 kennzeichnet damit auch wieder die Luftkonsolen, welche eine Aufbereitung der Blasluft, insbesondere in unterschiedliche Druckniveaus, ermöglichen. Damit ist jedoch auch eine Vielzahl von Verbindungsschläuchen 126 vorgesehen, welche diese Luft den Umformungsstationen 8 zuführen. Dabei ist jede Umformungsstation mit mindestens zwei Schläuchen 126 verbunden, durch die Druckluft mit unterschiedlichen Druckniveaus geleitet wird. Alternativ können zwischen Konsole und Verbindung zu den Stationen auch Ringleitungen für jede Druckstufe vorhanden sein.

Die Druckluft wird insbesondere vor dem Einleiten in die Flasche durch eine nicht gezeigte Einrichtung gefiltert und/oder sterilisiert.

Fig. 7 zeigt eine weitere Ausgestaltung der erfindungsgemäßen Vorrichtung. Um hier einen Eingriff in die Vorrichtung zu ermöglichen, ist hier - bevorzugt an der Wandung 46 - ein flexibles bzw. elastisches Element vorgesehen, in welches der Benutzer von außen mit seiner Hand greifen kann, ohne dabei unmittelbar in den Reinraum greifen zu müssen. Bei diesem Element 130 kann es sich beispielsweise um einen Eingriffshandschuh handeln, mittels dem beispielsweise ein Formatwechsel (Blasformwechsel oder Blasdüsenwechsel) möglich ist oder auch kleinere Reparaturen und/oder Wartungen an der Maschine.

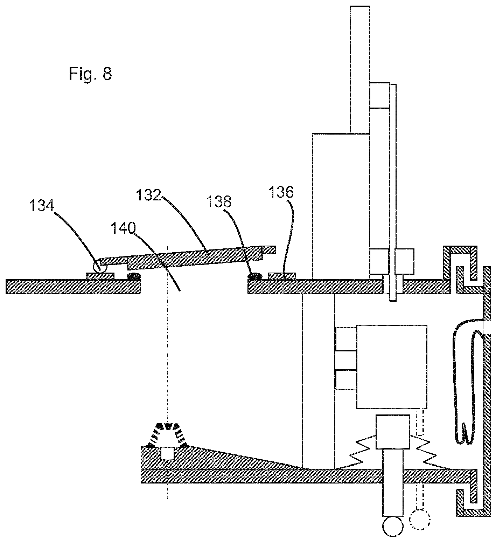

Fig. 8 zeigt eine weitere Ausführungsform der Erfindung. Bei dieser Ausführungsform ist eine Öffnung 140 vorgesehen sowie eine Öffnungsklappe 132, die über eine Schwenkverbindung 134 geöffnet werden kann, sodass ein Benutzer in den unter dieser Öffnungsklappe 132 liegenden Bereich gelangen bzw. einsteigen kann. Damit dient diese Öffnungsklappe 132 für die Durchführung von Reparaturen, Formatwechseln oder Wartungen der Maschine. Weiterhin kann eine nur schematisch dargestellte Sensoreinrichtung 136 vorgesehen sein, welche einen Öffnungs- oder Schließzustand der Öffnungsklappe 132 erfasst. Wenn diese Sensoreinrichtung 136 erkennt, dass die Öffnungsklappe 132 nicht geschlossen ist, ist es denkbar, dass die Maschine sowohl für die Produktion als auch für die Sterilisation (wegen Verkeimungsgefahr und/oder Verletzungsgefahr für das Personal) gesperrt wird. Auch wäre es möglich, dass diese Sensoreinrichtung 136 eine Fehlermeldung auslöst. Die Bezugszeichen 138 kennzeichnen grob schematisch Dichtungseinrichtungen, wie hier eine umlaufende, elastische Dichtungseinrichtung, welche einen sicheren Verschluss der Öffnung 140 fördern.

In den ganzen Ausführungsformen können zusätzlich mindestens eine, bevorzugt mehrere Reinigungs- oder Sterilisationsdüsen an der stationären Seitenwand 46 angebracht sein, über welche die Umformungsstationen von vorne gereinigt oder sterilisiert werden. Diese Düsen können sich ungefähr auf der Höhe des Handschuhs 130 aus Figur 7 befinden. Wenn sich der Träger während der Reinigung oder Sterilisation dreht, ist mit einer solchen Düse neben mehreren Umformungsstationen auch ein gegenüberliegender Wandabschnitt des Reinraums reinig- oder sterilisierbar, indem das Reinigungs- oder Sterilisationsmittel durch die Drehachse durch befördert wird.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: Träger
- 8: Umformungsstationen
- 10: Kunststoffvorformlinge
- 14: Reinigungseinrichtung
- 16: Blasformteile
- 17: Bodenteil
- 18: Reckstange
- 20: Behältnisse
- 22: Träger
- 24: Antriebswelle
- 25: Zuführeinrichtung
- 27: Abführeinrichtung
- 32: Ventilblock
- 34: Antriebseinrichtung
- 36, 38: Dichtungseinrichtungen
- 36a, 38a: Eingriffsbereiche, Schwerter
- 40: Reinraum
- 42: obere Begrenzungswand / Träger
- 44: untere Begrenzungswand
- 46: Außenwandung
- 48: Wellenelement
- 52: weiteres Dichtungsmittel
- 53: Schrägfläche
- 54: Kühlmittelschläuche
- 55: Verbindungsleitung
- 60: Konsole
- 82: Lagereinrichtung
- 92, 94: Leitungsverbindungen
- 102: Kanäle
- 104: Drehverteiler
- 106: Drehverteilerring
- 112: Kühlmittelleitung
- 120: Träger
- 122: Pneumatikdrehverbindung / Drehverteiler
- 124: Luftkonsolen
- 125: Zuführleitung
- 126: Leitungsverbindungen
- 130: elastisches Element
- 132: Öffnungsklappe
- 134: Schwenkverbindung
- 136: Sensoreinrichtung
- 138: Dichtungseinrichtungen
- 140: Öffnung

- L: Längsrichtung
- D: Drehachse
- A, B: Raumabschnitte

## Patentansprüche

1. Vorrichtung (1) zur Umformung von Kunststoffvorformlingen (10) zu Kunststoffbehältnissen (20) mit einer Transporteinrichtung (2), welche die Kunststoffvorformlinge (10) entlang eines vorgegebenen Transportpfads transportiert, wobei die Transporteinrichtung (2) einen um eine vorgegebene Drehachse (D) drehbaren Träger (22) aufweist, an dem eine Vielzahl von Umformungsstationen (8) zum Umformen der Kunststoffvorformlinge (10) zu den Kunststoffbehältnissen (20) angeordnet ist, mit einem Reinraum (40), innerhalb dessen zumindest Bestandteile der Umformungsstationen (8) angeordnet sind, wobei dieser Reinraum (40) mit wenigstens einer oberen Begrenzungswandung (42) und wenigstens einer unteren Begrenzungswandung (44) gegenüber einer unsterilen Umgebung abgegrenzt ist und wobei die Vorrichtung (1) eine Antriebseinrichtung (12) zum Antreiben des Trägers aufweist und diese Antriebseinrichtung (12) außerhalb des Reinraums (40) angeordnet ist
**dadurch gekennzeichnet, dass**
wenigstens ein in der Richtung der Drehachse (D) zwischen der oberen Begrenzungswandung (42) und der unteren Begrenzungswandung (44) liegender Raumabschnitt (A), der Vorrichtung (1), der wenigstens einen Abschnitt der geometrischen Drehachse (D) enthält, materialfrei ausgebildet ist und sich der Reinraum (40) innerhalb des Raumabschnitts (A) über die geometrische Drehachse (D) hinweg erstreckt.

2. Vorrichtung (1) nach Anspruch 1,
**dadurch gekennzeichnet, dass**
der Raumabschnitt sich von der oberen Begrenzungswandung (42) zu der unteren Begrenzungswandung (44) erstreckt und antriebswellenfrei und drehverbindungsfrei ausgebildet ist.

3. Vorrichtung (1) nach wenigstens einem der vorangegangenen Ansprüche,
**dadurch gekennzeichnet, dass**
der Reinraum (40) mittels einer weiteren Wandung (46) abgegrenzt ist, wobei wenigstens die obere Begrenzungswand (42) und/oder die untere Begrenzungswand (44) beweglich gegenüber dieser weiteren Wandung ist.

4. Vorrichtung (1) nach wenigstens einem der vorangegangenen Ansprüche,
**dadurch gekennzeichnet, dass**
die Vorrichtung (1) eine Vielzahl von Medienleitungen zur Versorgung der Umformungsstationen (8) aufweist, wobei zumindest ein Teil dieser Medienleitungen ausschließlich außerhalb des Reinraums (40) verläuft.

5. Vorrichtung nach Anspruch 4, **dadurch gekennzeichnet, dass** zumindest eine Medienleitung für Temperiermittel zum Temperieren der Blasformen ausschließlich außerhalb des Reinraums (40) verläuft.

6. Vorrichtung (1) nach wenigstens einem der vorangegangenen Ansprüche,
**dadurch gekennzeichnet, dass**
wenigstens eine Verbindungsleitung (92, 94) zur Versorgung wenigstens einer Umformungsstation (8) mit einem fließfähigen Medium durch ein Wellenelement (48) dieser Umformungsstation (8) verläuft.

7. Vorrichtung (1) nach wenigstens einem der vorangegangenen Ansprüche,
**dadurch gekennzeichnet, dass**
wenigstens eine Verbindungsleitung (92, 94) zur Versorgung wenigstens einer Umformungsstation (8) mit einem fließfähigen Medium durch ein Wandungselement verläuft.

8. Vorrichtung (1) nach wenigstens einem der vorangegangenen Ansprüche,
**dadurch gekennzeichnet, dass**
wenigstens eine Innenwandung (53) der Vorrichtung, welche einen die Drehachse (D) enthaltenden Raum begrenzt, gegenüber einer horizontalen Ebene schräg ausgebildet ist, derart, dass ein flüssiges Medium über diese Schrägfläche abfließen kann.

9. Vorrichtung (1) nach wenigstens einem der vorangegangenen Ansprüche,
**dadurch gekennzeichnet, dass**
die Vorrichtung (1) eine Sterilisationseinrichtung und/oder Reinigungseinrichtung (14) zum Sterilisieren und/oder Reinigen wenigstens eines Bereichs des Reinraums oder eines Bestandteils der Umformungsstationen aufweist.

10. Vorrichtung (1) nach wenigstens einem der vorangegangenen Ansprüche,
**dadurch gekennzeichnet, dass**
wenigstens eine Begrenzungswandung (42, 44), eine verschließbare Öffnung aufweist, über welche ein Bediener einen die Drehachse enthaltenden Raum der Vorrichtung erreichen kann, und diese Öffnung insbesondere die Drehachse (D) schneidet.

11. Vorrichtung (1) nach wenigstens einem der vorangegangenen Ansprüche,
**dadurch gekennzeichnet, dass** wenigstens eine stationäre Reinigungsdüse an der Wandung 46 angeordnet ist.

12. Vorrichtung (1) nach wenigstens einem der vorangegangenen Ansprüche,
**dadurch gekennzeichnet, dass**
eine Verlängerung der Drehachse (D) des Trägers materialfrei ausgebildet ist.

13. Verfahren zum Reinigen und/oder Sterilisieren von einem Reinraum oder in dem Reinraum angeordneter Bestandteile einer Umformungsstation einer Vorrichtung (1) nach Anspruch 1 , wobei Reinigungs- und/oder Sterilisationsmedium durch die Drehachse des Trägers in den Reinraum eintritt oder durch die Drehachse des Trägers hindurchtritt.

## Claims

1. Apparatus (1) for transforming plastic parisons (10) to plastic containers (20) with a transport device (2) which transports the plastic parisons (10) along a predetermined transport path, wherein the transport device (2) has a carrier (22) which is rotatable about a predetermined axis of rotation (D) and on which a plurality of transforming stations (8) are disposed for transforming the plastic parisons (10) into the plastic containers (20), with a clean room (40) within which at least components of the transforming stations (8) are disposed, wherein this clean room (40) is demarcated from unsterile surroundings by at least one upper boundary wall (42) and at least one lower boundary wall (44), and wherein the apparatus (1) has a drive unit (12) for driving the carrier and this drive unit (12) is disposed outside the clean room (40),
**characterised in that**
at least one room portion (A) of the apparatus (1), which is located in the direction of the axis of rotation (D) between the upper boundary wall (42) and the lower boundary wall (44) and which contains at least a portion of the geometric axis of rotation (D), is material-free and the clean room (40) within the room portion (A) extends beyond the geometric axis of rotation (D).

2. Apparatus (1) according to claim 1,
**characterised in that**
the room portion extends from the upper boundary wall (42) to the lower boundary wall (44) extends and is free of drive shafts and free of rotary connections.

3. Apparatus (1) according to at least one of the preceding claims,
**characterised in that**
the clean room (40) is delimited by means of a further wall (46), wherein at least the upper boundary wall (42) and/or the lower boundary wall (44) is movable relative to this further wall.

4. Apparatus (1) according to at least one of the preceding claims,
**characterised in that**
the apparatus (1) has a plurality of media conduits for supplying the transforming stations (8), and wherein at least a part of these media conduits extends exclusively outside the clean room (40).

5. Apparatus (1) according to claim 4,
**characterised in that**
at least one media conduit for temperature control media for regulating the temperature of the blow moulds extends exclusively outside the clean room (40).

6. Apparatus (1) according to at least one of the preceding claims,
**characterised in that**
at least one connecting conduit (92, 94) for supplying at least one transforming station (8) with a free-flowing medium extends through a shaft element (48) of this transforming station (8).

7. Apparatus (1) according to at least one of the preceding claims,
**characterised in that**
at least one connecting conduit (92, 94) for supplying at least one transforming station (8) with a free-flowing medium extends through a wall element.

8. Apparatus (1) according to at least one of the preceding claims,
**characterised in that**
at least one inner wall (53) of the apparatus which delimits a space containing the axis of rotation (D) is inclined with respect to a horizontal plane in such a way that a fluid medium can flow off over this inclined surface.

9. Apparatus (1) according to at least one of the preceding claims,
**characterised in that**
the apparatus (1) has a sterilising arrangement and/or cleaning device (14) for sterilising and/or cleaning a region of the clean room or a component of the transforming stations.

10. Apparatus (1) according to at least one of the preceding claims,
**characterised in that**
at least one boundary wall (42, 44) has a closable opening through which an operator can reach a room of the apparatus containing the axis of rotation, and this opening in particular intersects the axis of rotation (D).

11. Apparatus (1) according to at least one of the preceding claims,
**characterised in that**
at least one stationary cleaning nozzle is disposed on the wall (46).

12. Apparatus (1) according to at least one of the preceding claims,
**characterised in that**
an extension of the axis of rotation (D) of the carrier is material-free.

13. Method for cleaning and/or sterilising of a clean room or of components arranged in the clean room of a transforming station of an apparatus (1) according to claim 1 which are disposed in the clean room, wherein cleaning and/or sterilising medium enters the clean room through the axis of rotation of the carrier or passes through the axis of rotation of the carrier.

## Revendications

1. Dispositif (1) destiné à façonner des ébauches en matière plastique (10) pour obtenir des récipients en matière plastique (20), comprenant un système de transport (2), lequel transporte les ébauches en matière plastique (10) le long d'un trajet de transport prédéfini, dans lequel le système de transport (2) comprend un support (22) pouvant être amené en rotation autour d'un axe de rotation (D) prédéfini, sur lequel sont agencées une pluralité de stations de façonnage (8) destinées à façonner les ébauches en matière plastique (10) de manière à obtenir des récipients en matière plastique (20), une salle blanche (40), à l'intérieur de laquelle sont agencés au moins des composants des stations de façonnage (8), dans lequel cette salle blanche (40) est délimitée par rapport à un environnement non stérile par au moins une paroi supérieure de délimitation (42) et au moins une paroi inférieure de délimitation (44) et dans lequel le dispositif (1) comprend un système d'entraînement (12) destiné à entraîner le support et ce système d'entraînement (12) est agencé à l'extérieur de la salle blanche (40),
**caractérisé en ce que**
au moins une section de salle (A) du dispositif (1), située dans la direction de l'axe de rotation (D) entre la paroi supérieure de délimitation (42) et la paroi inférieure de délimitation (44), laquelle section contient au moins une section de l'axe de rotation géométrique (D), est exempte de matière et la salle blanche (40) s'étend à l'intérieur de la section de salle (A) au-delà de l'axe de rotation géométrique (D).

2. Dispositif (1) selon la revendication 1,
**caractérisé en ce que**
la section de salle s'étend de la paroi supérieure de délimitation (42) à la paroi inférieure de délimitation (44) et est exempte d'arbre d'entraînement et exempte de liaison rotative.

3. Dispositif (1) selon au moins l'une des revendications précédentes,
**caractérisé en ce que**
la salle blanche (40) est délimitée au moyen d'une autre paroi (46), dans lequel au moins la paroi supérieure de délimitation (42) et/ou la paroi inférieure de délimitation (44) est mobile par rapport à cette autre paroi.

4. Dispositif (1) selon au moins l'une des revendications précédentes,
**caractérisé en ce que**
le dispositif (1) comprend une pluralité de conduites de milieux pour l'alimentation des stations de façonnage (8), dans lequel au moins une partie de ces conduites de milieux s'étend exclusivement à l'extérieur de la salle blanche (40).

5. Dispositif selon la revendication 4,
**caractérisé en ce que**
au moins une conduite de milieux de thermorégulation destinée à thermo-réguler les moules de soufflage s'étend exclusivement à l'extérieur de la salle blanche (40).

6. Dispositif (1) selon au moins l'une des revendications précédentes,
**caractérisé en ce que**
au moins une conduite de liaison (92, 94) destinée à alimenter au moins une station de formage (8) en milieu coulant s'étend à travers un élément formant arbre (48) de cette station de façonnage (8).

7. Dispositif (1) selon au moins l'une des revendications précédentes,
**caractérisé en ce que**
au moins une conduite de liaison (92, 94) destinée à alimenter au moins une station de formage (8) en milieu coulant s'étend à travers un élément formant paroi.

8. Dispositif (1) selon au moins l'une des revendications précédentes,
**caractérisé en ce que**
au moins une paroi intérieure (53) du dispositif, laquelle délimite une salle contenant l'axe de rotation (D), est inclinée par rapport à un plan horizontal, de telle manière qu'un milieu liquide peut s'écouler sur toute l'étendue de cette surface inclinée.

9. Dispositif (1) selon au moins l'une des revendications précédentes,
**caractérisé en ce que**
le dispositif (1) comprend un système de stérilisation et/ou un système de nettoyage (14) destinés à stériliser et/ou à nettoyer au moins une zone de la salle blanche ou d'un composant des stations de façonnage.

10. Dispositif (1) selon au moins l'une des revendications précédentes,
**caractérisé en ce que**
au moins une paroi de délimitation (42, 44) présente une ouverture pouvant être refermée, par laquelle un opérateur peut atteindre une salle du dispositif contenant l'axe de rotation, et cette ouverture coupe en particulier l'axe de rotation (D).

11. Dispositif (1) selon au moins l'une des revendications précédentes,
**caractérisé en ce que**
au moins une buse de nettoyage fixe est agencée sur la paroi (46).

12. Dispositif (1) selon au moins l'une des revendications précédentes,
**caractérisé en ce que**
un prolongement de l'axe de rotation (D) du support est exempt de matière.

13. Procédé de nettoyage et/ou de stérilisation d'une salle blanche ou de composants d'une station de façonnage d'un dispositif (1) selon la revendication 1 agencés dans la salle blanche, dans lequel un milieu de nettoyage et/ou de stérilisation pénètre dans la salle blanche à travers l'axe de rotation ou traverse l'axe de rotation du support.
